# EUROPEAN PATENT APPLICATION

(11) **EP 1 786 228 A1**
(43) Date of publication of application: **16.05.2007**
(21) Application number: 05300909.8
(22) Date of filing: 10.11.2005
(51) Int. Cl.: H04Q 7/38

(54) **METHOD AND APPARATUS FOR UPLINK RESOURCE ALLOCATION IN A CELLULAR COMMUNICATION SYSTEM**

(71) Applicant: Alcatel Lucent, 75008 Paris (FR)
(72) Inventor: Doetsch, Uwe, 71701, Schwieberdingen (DE); Zeller, Dietrich, 71067, Sindelfingen (DE)
(74) Representative: Brose, Gerhard

(57) **Abstract**

The invention relates to a method for allocating radio cell resources for the uplink communication between at least one terminal (T) and a serving base station (B1) in a mobile radio cell configuration system comprising a serving cell (C1) and at least one neighbouring cell (C2, C3), wherein the serving base station (B1) receives information (M) on radio measurements performed by the terminal (T); the serving base station (B1) receives or calculates an indication (I) of the interference level generated by that terminal in the at least one neighbouring cell (C2,C3); and the serving base station (B1) allocates uplink cell resources to the terminal (T) in proportion to the interference generated by that terminal in the at least one neighbouring cell (C2,C3).

## Description

The present invention relates to wireless communications systems, and more particularly, to a resource allocation method for uplink channels in a mobile radio access system.

The third generation (3G) evolution of Global Systems for Mobile communications (GSM) networks, commonly known as Universal Mobile Telecommunications Systems (UMTS), studies enhancements that can be applied to the radio access network in order to improve the performance on uplink dedicated transport channels. Uplink evolution technology is currently being standardized in the 3rd Generation Partnership Project (3GPP), which develops such UMTS standards 3GPP, under the "FDD Enhancement Uplink" work item. This enhanced uplink feature, or Enhanced Dedicated Channel (E-DCH), for UMTS is also generally known as High Speed Uplink Packet Access (HSUPA). Current Stage 2 specification for E-DCH can be found in 3GPP document TS 25.309 v6.3.0 (2005-06) "FDD Enhanced Uplink; Overall description", which is considered the closest state of the art.

A key aspect of the E-DCH is "Node B controlled scheduling", which refers to functionality that will be incorporated into the Node B to enable management of the uplink noise rise caused by different mobile stations or terminals. For E-DCH operation, the Node B sends a resource indication (scheduling grant) to indicate to the terminal the maximum amount of uplink resources it may use. The scheduling grants control the maximum allowed power ratio between the Enhanced Dedicated Physical Data Channel (E-DPDCH) and Dedicated Physical Control Channel (DPCCH) at the terminal. There are two types of grants, the "absolute" grants provide an absolute limitation of the maximum amount of uplink resources the terminal may use, and the "relative" grants (updates) increase or decrease the resource limitation compared to the previously used value. Absolute grants are sent by the serving cell and relative grants are sent by the serving and non-serving cells as a complement to the absolute grants.

The current 3GPP specification defines uplink scheduling scenarios for a terminal in a soft handover and non-soft handover situation. During soft handover, a terminal simultaneously communicates with two or more cells belonging to different base stations of the same radio network controller (RNC) or different RNCs. Those base stations simultaneously receiving the terminal transmitted signals are said to belong to the "active set". The terminal channel information is detected by the at least two base stations, the serving base station and the non-serving base station, of the active set and is routed to the RNC for selection combining. In case that more than one base station have received successfully the same data and routed to the RNC, the selection combining function in RNC typically forwards the data it has received first towards higher layers. In a non-soft handover situation, the terminal is only connected to one base station, the serving base station.

For E-DCH scheduling, when the terminal is in non-soft handover, there is only a single cell responsible for enhanced uplink scheduling, the serving cell, and only intra-cell interference situation is taken into account when the serving Node B sends absolute and relative grants to the terminal. The impact of interference created in neighboring cells is not considered for scheduling. In soft handover (SHO) the non-serving cells just avoid interference overload caused by the terminal in the serving cell. When the terminal enters in SHO, there is one serving cell and at least one non-serving cell belonging to the active set, and the terminal shall be capable of receiving absolute and relative grants from the serving cell and relative grants from the non-serving cells. The non-serving cells may send relative grant indications to the terminal depending on the corresponding Node B cell noise situation, e.g. if the terminal transmissions are causing excessive noise in a certain non-serving cell, said non-serving cell Node B may send an "overload indication" to that terminal which indicates the terminal to reduce maximum allowed transmission power ratio.

Although the above detailed method for uplink resource allocation relates to a specific 3GPP specification and implementation applicable to HSUPA based on Wideband Code Division Multiple Access (WCDMA), the same problem shall be solved for other cellular radio access technologies, e.g. such as Single Carrier Frequency Division Multiple Access (SC-FDMA), in which a terminal communicates with a base station and the latter allocates uplink communication resources to that terminal.

It is the object of the present invention to provide an advantageous mechanism to control uplink resource allocation to a terminal in a cellular communications system.

The object is achieved by a method for allocating radio cell resources for the uplink communication between one terminal and a serving base station according to claim 1 and by a network element of a mobile network, such as a base station, according to claim 7.

The basic idea of the invention is to provide scheduling of terminal uplink resources only from the serving cell and considering the impact of interference provoked by the terminal in neighbor cells.

According to a first preferred embodiment of the invention, the serving base station receives information from the terminal about the transmit power required for a certain bit rate. Based on the terminal measurement information the base station calculates or receives an indication of the interference that terminal will generate in neighbour cells, and according to this value it allocates uplink cell resources (e.g. by scheduling grants) to the terminal such that the interference generated in the neighbouring cells remains in acceptable boundaries e.g. targets a certain total interference level.

According to a second preferred embodiment of the invention, the serving base station further receives information about radio traffic load situation in neighbouring cells, and also based on such added information, it allocates uplink cell resources to the terminal such that the interference generated in the neighbouring cells remains in acceptable boundaries.

Advantageous configurations of the invention emerge from the dependent claims, the following description and the drawings. For example, it is seen advantageous that, by using the proposed invention, the complexity of the uplink base station scheduling method is considerably reduced since there is only one cell communicating with the terminal at any time. Soft handover situations, that is, multiple cell scheduling grant transmission to the terminal, and the need of a radio network controller, can be avoided, thus simplifying network architecture and communication mechanisms between the terminal and the radio access network. A further advantage is achieved, due to the fact that, even in such simplified network architecture and communication scenario, i.e. without SHO and RNC, inter-cell interference in the radio access network can be mitigated and controlled.

An embodiment example of the invention is now explained with the aid of Figures 1 to 4.

Fig. 1 illustrates a block diagram of a conventional wireless communications system including a mobile network communicating with a plurality of terminals.

Fig. 2 schematically illustrates a conventional wireless communications system with cellular radio service arrangement.

Fig. 3 shows a flow chart illustrating an operating process of a base station for providing uplink resource allocation according to a first embodiment of the invention.

Fig. 4 shows a flow chart illustrating an operating process of a base station for providing uplink resource allocation according to a second embodiment of the invention.

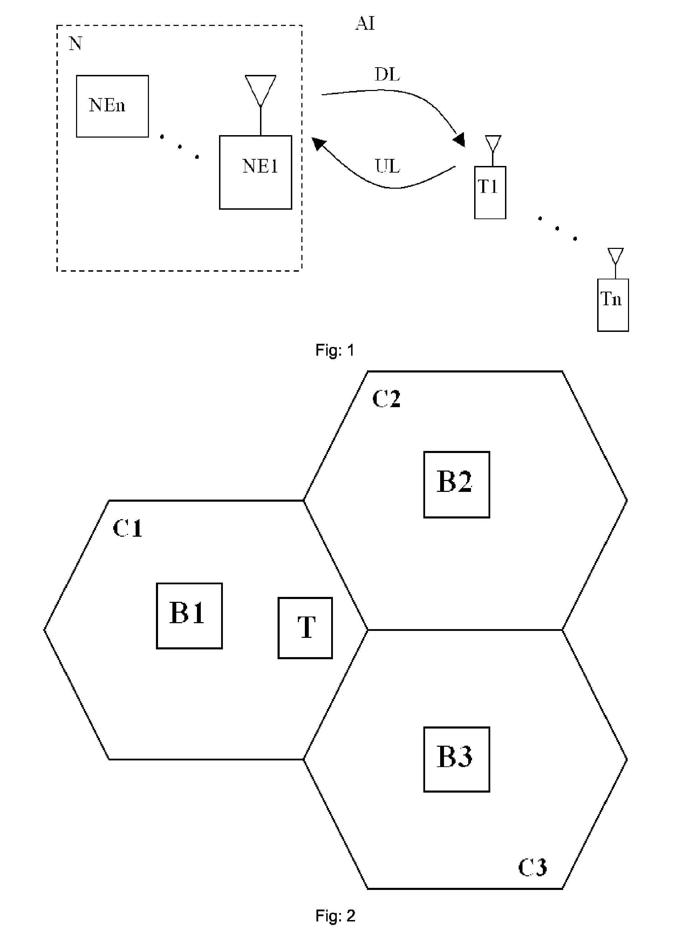

Figure 1 shows a block diagram of a wireless communications system in which a mobile radio network N, including a plurality of network elements NE1 to NEn, and a plurality of user terminals T1 to Tn exchange data information via a radio air interface Al downlink connection DL and an uplink connection UL. The network elements NE1 to NEn can be for example base stations or Node Bs, radio network controllers RNCs, core network switches, or any other communication elements which are generally used for wireless mobile communications.

A typical wireless communications system architecture comprises at least one RNC connected to a plurality of Node Bs, the RNC controlling certain functions of the plurality of Node Bs for providing radio access network service. According to an embodiment of the invention, the radio access network does not need the presence of an RNC for providing uplink resource allocation to the terminals.

Figure 2 schematically illustrates a conventional wireless communications system with cellular radio service arrangement, comprising three base stations B1 to B3 providing communication inside a radio cell C1 to C3 to a plurality of user terminals. In the example of the figure only one terminal T is shown, located in a first cell C1 being served by a first base station B1, and that means, B1 is the "serving base station" and C1 is the "serving cell" of terminal T.

According to prior art uplink resource allocation scheduling, if terminal T is not in a soft handover situation, it communicates only with its serving base station B1 of the serving cell C1, and the base station B1 transmits to that terminal T absolute or relative grants according to the load situation in said serving cell C1. If, on the other hand, the terminal engages in a soft handover uplink communication with its serving base station B1 and at least one other non-serving base station B2 and/or B3, then its serving base station B1 transmits to that terminal absolute or relative grants according to the load situation in the serving cell C1 and the at least one other non-serving base station B2 and/or B3 transmits to that terminal T relative grants according to the load situation in the at least one non-serving cell C2 and/or C3, that is, for example, if due to the transmission of terminal T the interference level provoked in the second cell C2 is excessive, the second base station B2 sends an "overload indication" in a relative grant to the terminal T in order to reduce the maximum allowed transmission power ratio.

In an uplink resource allocation scenario according to the invention, the terminal T receives scheduling grants only from its serving base station B1 at any time, that is, no soft handover scheduling grant mechanisms are applied. The serving base station B1 will be the sole responsible for allocating resources to the terminal T and coordinate inter-cell interference between neighbor cells C2 and C3. The neighbor base stations B2 and/or B3 do not send any "overload indication" to the terminal T any more.

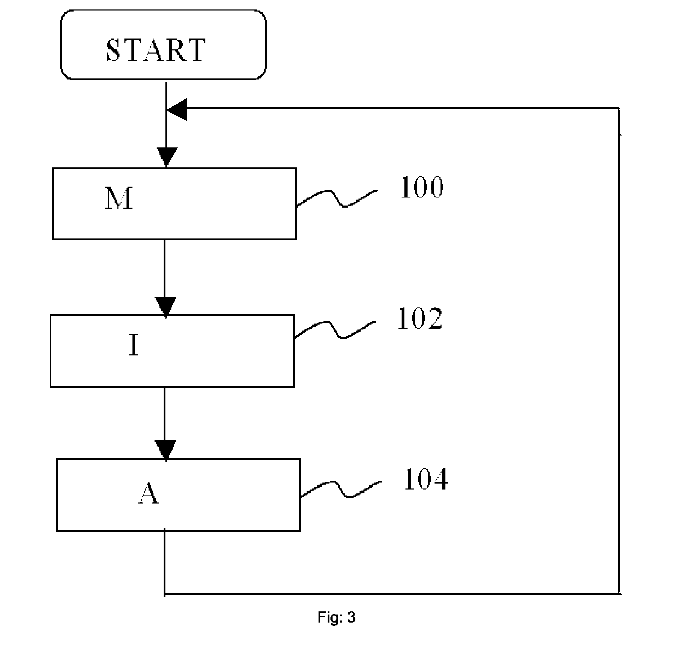

Figure 3 shows a flow chart illustrating an operating process of a base station B1 to B3 for providing uplink resource allocation to a terminal T1 to Tn according to a first embodiment of the invention.

The serving base station receives, in a first step 100, information M on radio measurements performed by a served terminal on e.g. the Common Pilot Channel (CPICH) of the serving cell and the neighboring cells of such serving cell. Said information may be for example sent directly by the terminal to the base station or the base station may receive it from other radio network elements, such as an RNC.

The serving base station, in step 102, calculates an indication I of the interference level that terminal will generate in the neighbor cells of the serving cell, based on said terminal measurements. It is also possible that the terminal itself calculates such indication I and sends it to the base station. Said inter-cell interference level indication I may be expressed for example in terms of a cell geometry factor (G), where G is the own-to-other cell interference ratio, calculated e.g. as the ratio of received CPICH power from the serving cell to the sum of received CPICH powers received from neighbouring cells. A higher value of G would mean that the terminal will cause little interference in neighbour cells, and a lower value of G means that the inter-cell interference provoked by that terminal in neighbour cells is high.

Taking into account the inter-cell interference level indication I of step 102, then the serving base station allocates uplink resources to the terminal in step 104, by sending for example a scheduling grant.

According to the invention, the base station allocates uplink cell resources in a way such that the interference generated in neighbouring cells remains in acceptable boundaries. Base station uplink resource allocation in step 104 is based on the idea that the user which creates more interference receives less bandwidth e.g. by reducing the maximum allowed power ratio in a scheduling grant. A good compromise is to allocate to the terminals a bandwidth in reverse proportion to the effort i.e. the interference level the provision of a certain bit rate requires. For example, the base station scheduler may target a certain total interference level e.g. Rise over Thermal (RoT) value, calculated as the ratio of the total power received at the base station to the thermal noise, which is to be distributed among the number of terminals served in that cell. The distribution of the amount of RoT for each terminal in the serving cell is then done according to a factor k which depends on the inter-cell interference level indication I calculated in step 102. The factor k could be for example calculated as the interference created in the serving cell divided by the interference created in the neighbouring cells plus interference created in the serving cell, as shown in the following formula
***Mathematical formula found. No formatter available, formula omitted!***
. The higher the amount of k, the higher the amount of allowed RoT that terminal will receive, which means more bandwidth allocated. On the other hand, if a terminal requesting uplink resources is situated close to the cell border, thus causing more interference in neighbour cells, the value of k will be lower and so the amount of allowed RoT that terminal will receive.

The base station carries out the basic steps 100, 102 and 104 of the uplink resource allocation provision for all the terminals served by this base station.

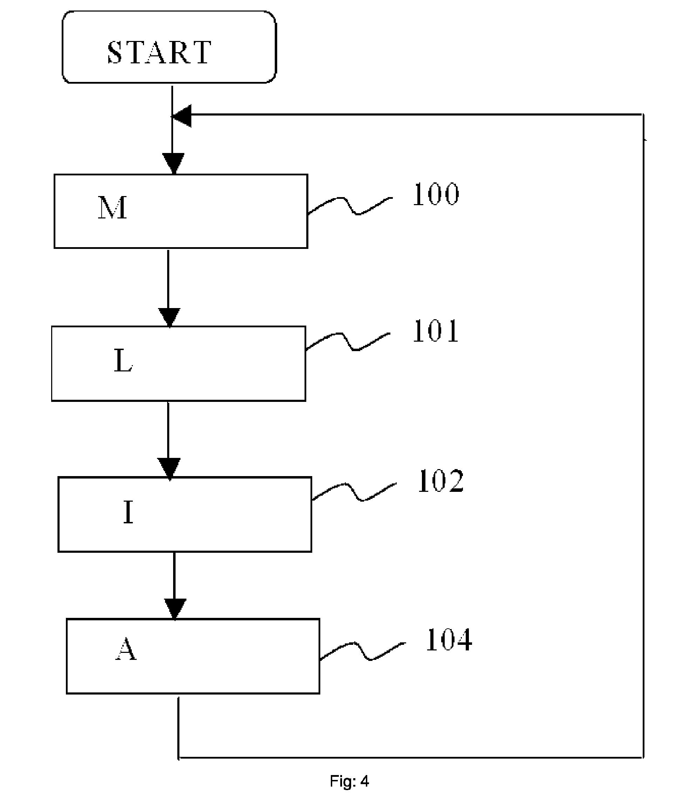

Figure 4 shows a flow chart illustrating an operating process of a base station B1 to B3 for providing uplink resource allocation to a terminal T1 to Tn according to a second embodiment of the invention.

The serving base station receives, in a first step 100, information M on radio measurements performed by a served terminal on e.g. the Common Pilot Channel (CPICH) of the serving cell and the neighboring cells of such serving cell. Said information may be for example sent directly by the terminal to the base station or the base station may receive it from other radio network elements, such as an RNC.

In step 101, the serving base station further receives information L about the radio traffic load situation in neighbor cells. This can be carried out, for example by means of a signaling link for intercommunication between base stations.

The serving base station, in step 102, calculates an indication I of the interference level that terminal will generate in the neighbor cells of the serving cell, based on said terminal measurements. It is also possible that the terminal itself calculates such indication I and sends it to the base station. Said inter-cell interference level indication I may be expressed for example in terms of the cell geometry factor G already described above.

Taking into account the inter-cell interference level indication I of step 102, then the serving base station allocates uplink resources to the terminal in step 104, by sending for example a scheduling grant.

According to the invention, the base station allocates uplink cell resources in a way such that the interference generated in neighbouring cells remains in acceptable boundaries. Base station uplink resource allocation in step 104 is based on the idea that the user which creates more interference receives less bandwidth e.g. by reducing the maximum allowed power ratio in a scheduling grant. A good compromise is to allocate to the terminals a bandwidth in reverse proportion to the effort i.e. the interference level the provision of a certain bit rate requires. For example, the base station scheduler may target a certain total interference level e.g. Rise over Thermal (RoT) value, calculated as the ratio of the total power received at the base station to the thermal noise, which is to be distributed among the number of terminals served in that cell. The distribution of the amount of RoT for each terminal in the serving cell is then done according to a factor k which, according to the second embodiment of the invention, depends on the traffic load information L received in step 101 and the inter-cell interference level indication I calculated in step 102. For example, the base station first uses the load information received in step 101 for making an estimation of the radio traffic load situation in neighbour cells, and depending on if the value estimated exceeds a certain value or not then the base station calculates factor k with different approaches. If, for example, the estimated traffic load situation does not exceed a certain value, lets say 10%, then this would mean that the interference provoked in neighbour cells is not critical and the base station scheduler could give factor k the same value for all the terminals in the serving cell, and thus would mean that all terminals would receive the same amount of RoT. On the other hand, if the estimated traffic load situation exceeds such value, 10%, then the base station could calculate factor k as the interference created in the serving cell divided by the interference created in the neighbouring cells plus interference created in the serving cell, as shown in the formula
***Mathematical formula found. No formatter available, formula omitted!***
. The higher the amount of k, the higher the amount of allowed RoT that terminal will receive, which means more bandwidth allocated. On the other hand, if a terminal requesting uplink resources is situated close to the cell border, thus causing more interference in neighbour cells, the value of k will be lower and so the amount of allowed RoT that terminal will receive.

The base station carries out the basic steps 100, 101, 102 and 104 of the uplink resource allocation provision for all the terminals served by this base station. It has to be noted that the reception of information about the radio traffic load situation L in neighbor cells, of step 101, can be done at any time previous to the allocation of uplink resources, in step 104.

For the sake of generalization, it is understood that the means to carry out the method or certain steps of the method for uplink resource allocation herein described can be located anywhere in a base station of the radio access network, said means being implemented in hardware or software form. The base station may act actively, that is, by requesting the information needed for carrying out the method of the invention or passively, by receiving said information from the terminal and the network at suitable when scheduling is requested. The method for allocating radio cell resources for the uplink communication according to the invention is not limited to HSUPA and may be used by other radio network access technologies.

## Claims

1. Method for allocating radio cell resources for the uplink communication between at least one terminal (T) and a serving base station (B1) in a mobile radio cell configuration system comprising a serving cell (C1) and at least one neighbouring cell (C2, C3), the method comprising the steps of:
- (100) the serving base station (B1) receiving information (M) on radio measurements performed by the terminal (T);
- (102) the serving base station (B1) receiving or calculating an indication (I) of the interference level generated by that terminal in the at least one neighbouring cell (C2,C3);
- (104) the serving base station (B1) allocating uplink cell resources to the terminal (T) in proportion to the interference generated by that terminal in the at least one neighbouring cell (C2,C3), in a way that a terminal generating less interference in the neighbouring cells (C2,C3) receives more resources than a terminal generating more interference.

2. The method for allocating radio cell resources for the uplink communication of claim 1 **characterized in that** the serving base station (B1) targets a certain total interference value and distributes it among all the terminals served **in that** serving cell (C1), and **in that** the amount of the value distributed to the terminal (T) depends on the indication (I) of the interference level generated by that terminal on the at least one neighbouring cell (C2,C3).

3. The method for allocating radio cell resources for the uplink communication of claim 2 further comprising:
- (101) the serving base station (B1) further receiving information (L) about the traffic load situation in the at least one neighbouring cell (C2,C3); and the amount of the total interference value distributed to the terminal (T) depends on the information (L) about the traffic load situation in the at least one neighbouring cell (C2,C3) and the indication (I) of the interference level generated by that terminal on the at least one neighbouring cell (C2,C3).

4. The method for allocating radio cell resources for the uplink communication of claim 1 **characterized in that** the information (M) on radio measurements performed by the terminal (T) is an indication about the Common Pilot Channel (CPICH) signal power received from the serving cell (C1) and the at least one neighbor cell (C2,C3).

5. The method for allocating radio cell resources for the uplink communication of claim 1 **characterized in that** the indication (I) of the interference level generated by that terminal (T) on the at least one neighbouring cell (C2,C3) is expressed in terms of a cell geometry factor, such as the own-to-other cell interference ratio.

6. The method for allocating radio cell resources for the uplink communication of claim 2 **characterized in that** the amount of the total interference value distributed to the terminal (T) depends on a cell geometry factor, such as the own-to-other cell interference ratio.

7. A network element of a mobile network (N), such as a base station (B1), the network element adapted to:
- receive information (M) on radio measurements performed by a terminal (T);
- receive or calculate an indication (I) of the interference level generated by that terminal in at least one neighbouring cell (C2,C3);
- allocate uplink cell resources to the terminal (T) in reverse proportion to the interference generated by that terminal in the at least one neighbouring cell (C2,C3).

8. The network element of claim 7 further adapted to target a certain total interference value and distribute it among all the terminals served in a serving cell (C1), in a way such that the amount of that value distributed to the terminal (T) depends on the indication (I) of the interference level generated by that terminal in the at least one neighbouring cell (C2,C3).

9. The network element of claim 8 further adapted to receive information (L) about the traffic load situation in the at least one neighbouring cell (C2,C3); and distribute a certain total interference value among all the terminals served in a serving cell (C1), in a way such that the amount of that value distributed to the terminal (T) depends on the information (L) about the traffic load situation in the at least one neighbouring cell (C2,C3) and the indication (I) of the interference level generated by that terminal on the at least one neighbouring cell (C2,C3).

10. Mobile network (N) comprising a network element according to claim 7.
